# EUROPEAN PATENT SPECIFICATION

(11) **EP 4 618 166 B1**
(45) Date of publication and mention of the grant of the patent: **19.08.2026**
(21) Application number: 23903990.2
(22) Date of filing: 13.12.2023
(51) Int. Cl.: H01M 4/04, H01M 4/13, H01M 4/139

(54) **APPARATUS AND METHOD FOR MANUFACTURING ELECTRODE**
VORRICHTUNG UND VERFAHREN ZUR HERSTELLUNG EINER ELEKTRODE
APPAREIL ET PROCÉDÉ DE FABRICATION D'ÉLECTRODE

(30) Priority: 13.12.2022 KR 20220174158
(43) Date of publication of application: 17.09.2025
(73) Proprietor: LG Energy Solution, Ltd., Seoul 07335 (KR)
(72) Inventor: NA, Seon Hyeong, Daejeon 34122 (KR); PAENG, Ki Hoon, Daejeon 34122 (KR)
(74) Representative: Hoffmann Eitle
(86) International application number: PCT/KR2023/020524
(87) International publication number: WO 2024/128789

(56) References cited:
- WO-A1-2021/118141
- JP-A- 2019 029 256
- KR-A- 20020 055 869
- KR-A- 20170 024 669
- KR-A- 20190 106 077
- KR-A- 20200 123 631
- KR-A- 20220 021 841

## Description

### TECHNICAL FIELD

### CROSS-REFERENCE TO RELATED APPLICATION

The present application claims the benefit of the priority of Korean Patent Application No. 10-2022-0174158, filed on December 13, 2022.

### TECHNICAL FIELD

The present invention relates to an apparatus and method for manufacturing an electrode in which an electrode active material is applied on a current collector.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture an electrode assembly, a cathode (hereinafter, referred to as a positive electrode), a separator, and an anode (hereinafter, referred to as a negative electrode) are manufactured and stacked. Specifically, a positive electrode active material is applied to a positive electrode current collector, and a negative electrode active material is applied to a negative electrode current collector to manufacture a positive electrode (cathode) and a negative electrode (anode). Also, when the separator is interposed and stacked between the manufactured positive electrode and the manufactured negative electrode, unit cells are formed. The unit cells are stacked on each other to form an electrode assembly. Also, when the electrode assembly is accommodated in a specific case, and an electrolyte is injected, the secondary battery is manufactured.

Each of the electrodes such as the positive electrode and the negative electrode includes an electrode tab. The electrode tab may be formed by notching a non-coating portion of the current collector, to which the electrode active material is not applied.

When manufacturing the electrodes, a temperature of each of the electrode is an important factor that has to be managed because the temperature of the electrode is directly related to performance and a defect rate of the product. In more detail, physical properties and a drying speed of the electrode active material vary depending on the temperature of the electrode, and the physical properties of the current collector also are changed.

In the related art, an infrared temperature sensor has been used to measure the temperature of the electrode. However, there is a problem in that accurate temperature measurement is difficult due to surface reflection of the electrode, especially the current collector. Although the infrared temperature sensor that is specifically for metals having high surface gloss also exist, the temperature sensor has a problem of low reliability below 200 degrees Celsius.

### DISCLOSURE OF THE INVENTION

### TECHNICAL PROBLEM

An object of the present invention for solving the above problem is to provide an apparatus and method for manufacturing an electrode, which are accurately measure a temperature of a current collector during a process of manufacturing an electrode.

### TECHNICAL SOLUTION

An apparatus for manufacturing an electrode according to an embodiment of the present invention includes: a transfer unit configured to transfer a sheet-shaped current collector; an application unit configured to apply a matte layer having reflectance less than that of the current collector on a first area including an edge portion in a width direction of the current collector; a coating unit configured to applying an electrode active material on a second area including a central portion in the width direction of the current collector and disposed at one side of the first area; a non-contact temperature sensor configured to measure a temperature of the matte layer; and a notching unit configured to notch the current collector so as to remove the matte layer and form an electrode tab.

The application unit may be configured to apply the matte layer at regular intervals.

The coating unit may be disposed behind the application unit in a transfer direction of the current collector.

The apparatus for manufacturing an electrode may further include: a heat treatment unit configured to heat-treat the current collector; and a controller configured to feedback control a temperature of the heat treatment unit and/or a speed of the transfer unit when a measured temperature of the non-contact temperature sensor gets out of a preset temperature range. The non-contact temperature sensor may be disposed behind the heat treatment unit in a transfer direction of the current collector.

The apparatus for manufacturing an electrode may further include: a drying unit configured to dry the electrode active material; and a controller configured to feedback control a temperature of the drying unit and/or a speed of the transfer unit when a measured temperature of the non-contact temperature sensor gets out of a preset temperature range. The non-contact temperature sensor may be disposed behind the drying unit in a transfer direction of the current collector.

A method for manufacturing an electrode according to an embodiment of the present invention includes steps of: transferring a sheet-shaped current collector; applying a matte layer having reflectance less than that of the current collector on a first area including an edge portion in a width direction of the current collector; applying an electrode active material on a second area including a central portion in the width direction of the current collector and disposed at one side of the first area; measuring a temperature of the matte layer using a non-contact temperature sensor; and notching the current collector to remove the matte layer and form an electrode tab.

In the applying of the matte layer, the matte layer may be applied at regular intervals in a transfer direction of the current collector.

The applying of the matte layer may be performed before the applying of the electrode active material.

The method may further include a step of heat-treating the current collector using a heat treatment unit. The non-contact temperature sensor may be disposed behind the heat treatment unit in a transfer direction of the current collector. When a measured temperature of the non-contact temperature sensor gets out of a preset temperature range, a temperature at which the current collector is heat-treated and/or a speed of the transfer unit are feedback controlled.

The method may further include a step of drying the current collector using a drying unit. The non-contact temperature sensor may be disposed behind the drying unit in a transfer direction of the current collector. When a measured temperature of the non-contact temperature sensor gets out of a preset temperature range, a temperature at which the electrode active material is dried and/or a speed of the transfer unit are feedback controlled.

### ADVANTAGEOUS EFFECTS

According to the preferred embodiment of the present invention, the non-contact temperature sensor may measure the temperature of the matte layer applied on the current collector. Since the reflectance of the matte layer is lower than that of the current collector, the non-contact temperature sensor may accurately measure the temperature.

In addition, since the matte layer is removed while notching the electrode tab, there may be the advantage that there is no need to add the separate process for removing the matte layer.

In addition, since the coating of the electrode active material is performed after the application of the matte layer, it may prevent the matte layer from being applied on the electrode active material.

In addition, the heat treatment of the current collector and/or the drying of the electrode active material may be controlled based on the accurately measured temperature of the non-contact temperature sensor. Therefore, the quality of the manufactured battery may be improved.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a view illustrating a configuration of an apparatus for manufacturing an electrode according to an embodiment of the present invention.
FIG. 2 is a plan view of a current collector illustrated in FIG. 1.
FIG. 3 is a plan view illustrating a matte layer and an electrode active material on a current collector illustrated in FIG. 2.
FIG. 4 is a plan view of a notched current collector illustrated in FIG. 3.
FIG. 5 is a view illustrating a configuration of an apparatus for manufacturing an electrode according to another embodiment of the present invention.
FIG. 6 is a flowchart illustrating a method for manufacturing an electrode according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

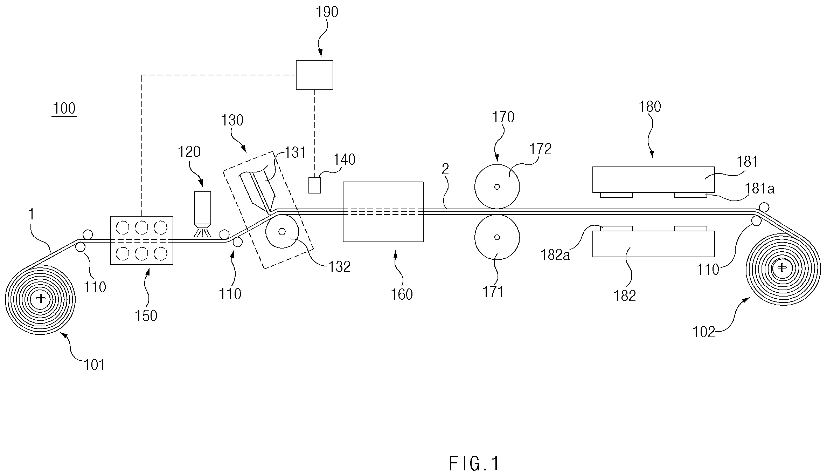

FIG. 1 is a view illustrating a configuration of an apparatus for manufacturing an electrode according to an embodiment of the present invention.

An apparatus 100 for manufacturing an electrode according to an embodiment of the present invention may manufacture an electrode by applying an electrode active material 2 on a current collector 1.

The electrode may be manufactured by applying the electrode active material 2 on the current collector 1 and then drying and pressing the electrode active material 2. If necessary, the electrode active material 2 may optionally include a conductive agent, a binder, a filler, and the like.

The current collector 1 may have a sheet shape. The current collector 1 may be manufactured generally to a thickness of 3 µm to 500 µm. The current collector 1 may be manufactured generally by using a material having conductivity without causing a chemical change.

The current collector 1 may have a fine unevenness on its surface to increase in adhesion of the electrode active material 2. The current collector 1 may be manufactured in various shapes such as a film, a sheet, a foil, a net, a porous body, a foam, or a non-woven fabric.

If the electrode manufactured by the apparatus 100 for manufacturing the electrode is the positive electrode, the current collector 1 may be a positive electrode current collector, and the electrode active material 2 may be a positive electrode active material.

For example, the positive electrode current collector may include at least one selected from the group consisting of stainless steel, aluminum, nickel, titanium, calcined carbon, and aluminum. In addition, the positive electrode current collector may be manufactured by surface-treating carbon, nickel, titanium, silver, or the like on a surface of stainless steel. However, this embodiment is not limited thereto.

For example, the positive electrode active material may include a layered compound such as lithium cobalt oxide (LiCoO₂) and lithium nickel oxide (LiNiO₂) or a compound substituted with one or more transition metals; lithium manganese oxide; lithium copper oxide (Li₂CuO₂); vanadium oxide; nickel (Ni) site type lithium nickel oxide; lithium manganese complex oxide; a disulfide compound, and the like. However, this embodiment is not limited thereto.

If the electrode manufactured by the apparatus 100 for manufacturing the electrode is the negative electrode, the current collector 1 may be the negative electrode current collector, and the electrode active material 2 may be the negative electrode active material.

For example, the negative electrode current collector may include at least one selected from the group consisting of copper, stainless steel, aluminum, nickel, titanium, and calcined carbon. Alternatively, the negative electrode current collector may be manufactured by surface-treating carbon, nickel, titanium, silver, etc. on a surface of copper or stainless steel or may include an aluminum-cadmium alloy. However, this embodiment is not limited thereto.

For example, the negative electrode active material may include: carbon such as non-graphitized carbon and graphitic carbon; metal complex oxide; lithium metal; a lithium alloy; a silicon-based alloy; a tin-based alloy; metal oxide; a conductive polymer such as polyacetylene; a Li-Co-Ni-based material, etc. However, this embodiment is not limited thereto.

In the apparatus 100 for manufacturing the electrode, a matte layer 3 may be applied on the current collector 1, a temperature of the matte layer 3 may be measured using a non-contact temperature sensor 140.

In more detail, the apparatus 100 for manufacturing the electrode may include a transfer unit 110 that transfers the current collector 1, an application unit 120 for applying the matte layer 3 to the current collector 1, a coating unit 130 that applies the electrode active material 2 to the current collector 1, and a non-contact temperature sensor 140 that measures a temperature of the matte layer 3.

The sheet-shaped current collector 1 may be unwound from an unwinder 101.

The transfer unit 11 may transfer the current collector 1. The transfer unit 110 may include a roll that rotates and transfers the current collector 1. The transfer unit 110 may be provided in plurality along a transfer direction of the current collector 1.

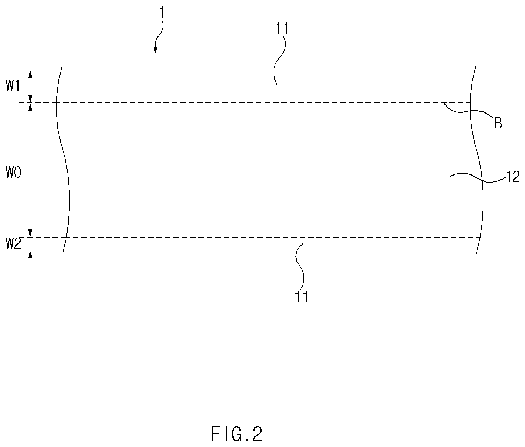

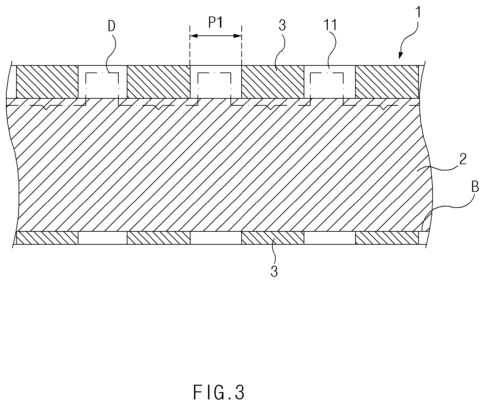

The application unit 120 may apply the matte layer 3 (see FIG. 3) on the current collector 1, and more specifically, on a first area 11 (see FIG. 2) of the current collector 1, which will be described later. A method in which the application unit 120 applies the matte layer 3 is not limited. For example, the application unit 120 may form the matte layer 3 by applying a matte material in a spray manner.

The matte layer 3 may have reflectance lower than that of the current collector 1. A material of the matte layer 3 is not limited. For example, the matte layer 3 may include matte paint.

The coating unit 130 may apply the electrode active material 2 on the current collector 1, more specifically, on a second area 12 (see FIG. 2) of the current collector 1, which will be described later.

The coating unit 130 may be disposed behind the application unit 120 in the transfer direction of the current collector 1. That is, the electrode active material 2 may be applied on the current collector 1 later than the matte layer 3. Thus, even if a portion of the matte layer 3 applied by the application unit 120 partially invades the second area 12 of the current collector 1, the electrode active material 2 may cover the invaded second area 12.

The coating unit 130 is not limited as long as the coating unit 130 has a form that is capable of applying the electrode active material 2 and may have a typically known configuration such as a coating die, a coating roll, or a slide-slot. For example, as illustrated in FIG. 1, the coating unit 130 may include s coating die 131 provided with an outflow slot so that the electrode active material 2 flows outward in the form of slurry toward the current collector 1, and a coater roll disposed to be spaced a predetermined distance from the outflow slot of the coating die 131 and transferring the current collector 1 by rotation so that the electrode active material 2 is applied to the current collector 1 by the coating die 131.

The application unit 120 may apply the matte layer 3 on at least one surface of the current collector 1, and the coating unit 130 may apply the electrode active material 2 on at least one surface of the current collector 1. For example, the matte layer 3 may be applied to one surface of the current collector 1, and the electrode active material 2 may also be applied on the one surface of the current collector 1. As another example, the matte layer 3 may be applied to one surface of the current collector 1 and the electrode active material 2 may be coated to the other surface of the current collector 1. As another example, the matte layer 3 may be applied to one surface of the current collector 1 and the electrode active material 2 may be applied on both surfaces of the current collector 1.

The non-contact temperature sensor 140 may be an optical temperature sensor. The non-contact temperature sensor 140 may measure the temperature of the matte layer 3 applied on the current collector 1. That is, the non-contact temperature sensor 140 may be disposed behind the application unit 120 in the transfer direction of the current collector 1.

The non-contact temperature sensor 140 may face the first area 11 of the current collector 1. The non-contact temperature sensor 140 may be disposed to be spaced apart from the current collector 1 to measure the temperature of the matte layer 3 in a non-contact manner. For example, the non-contact temperature sensor 140 may be an infrared temperature sensor. However, the type of non-contact temperature sensor 140 is not limited thereto.

Since the reflectance of the matte layer 3 is lower than that of the current collector 1, the non-contact temperature sensor 140 may accurately measure the temperature of the matte layer 3.

The non-contact temperature sensor 140 may be disposed behind the coating unit 130 in the transfer direction of the current collector 1. As a result, the temperature of the matte layer 3 may be measured after the current collector 1 and the matte layer 3 reach a certain degree of thermal equilibrium, and the temperature of the current collector 1 may be measured more accurately. However, it is not limited thereto, and the non-contact temperature sensor 140 may be disposed between the application unit 120 and the coating unit 130 in the transfer direction of the current collector 1.

The apparatus 100 for manufacturing the electrode may further include a heat treatment unit 150 that heat-treats the current collector 1.

The heat treatment unit 150 may be disposed in front of the coating unit 130 in the transfer direction of the current collector 1. Preferably, the heat treatment unit 150 may be disposed in front of the application unit 120.

An elongation and toughness of the current collector 1 may increase by the heat treatment to reduce a risk of disconnection in the current collector 1.

The heat treatment unit 150 may perform the heat treatment by convection using hot air, heating by a heat source, or both the heat treatment and the heating. For example, the heat treatment unit 150 may be configured to allow the sheet-shaped current collector 101 to pass through a space such as a tube or box containing the heat source and/or a member that supplies hot air. The configuration and heat treatment method of the heat treatment unit 150 are not limited thereto.

The heat treatment unit 150 may heat treat the current collector 1 at a preset temperature for a preset time. The time taken to perform the heat treatment on the current collector 1 may be adjusted according to a speed of the transfer unit 110, and a temperature at which the current collector 1 is heat-treated may be adjusted according to the temperature of the heat treatment unit 150.

The speed of the transfer unit 110 and/or the temperature of the heat treatment unit 150 may be feedback controlled depending on the temperature measured by the non-contact temperature sensor 140. In more detail, if the measured temperature of the non-contact temperature sensor 140 gets out of a preset temperature range, at least one of the speed of the transfer unit 110 or the temperature of the heat treatment unit 150 may be changed.

For example, if the measured temperature of the non-contact temperature sensor 140 is higher than the upper limit of the preset temperature range, the speed of the transfer unit 110 may increase, or the temperature of the heat treatment unit 150 may decrease. As a result, it may prevent the current collector 1 from being oxidized due to excessive heat treatment.

As another example, if the measured temperature of the non-contact temperature sensor 140 is lower than the lower limit of the preset temperature range, the speed of the transfer unit 110 may decrease, or the temperature of the heat treatment unit 150 may increase. As a result, the measured temperature may not a recrystallization temperature of the material forming the current collector 1 to prevent concerns that the toughness of the current collector 1 does not sufficiently increase from occurring.

The apparatus 100 for manufacturing the electrode may further include a drying unit 160 that dries the electrode active material 2. That is, the drying unit 160 may be disposed behind the coating unit 130 in the transfer direction of the current collector 1.

The electrode active material 2 on the current collector 1 may pass through the drying unit 160, and thus, a solvent may be evaporated to form an electrode mixture. The drying unit 160 is not limited as long as the drying unit 160 is a device that is capable of forming the electrode mixture by evaporating the solvent in the electrode active material 2. For example, the drying unit 160 may perform drying in a heating manner and/or a hot air manner.

The non-contact temperature sensor 140 may be disposed in front of the drying unit 160 in the transfer direction of the current collector 1. Therefore, the non-contact temperature sensor 140 may accurately measure a temperature before the current collector 1 is heated by the drying unit 160.

The apparatus 100 for manufacturing the electrode may further include a rolling unit 170 for rolling the current collector 1 and the dried electrode active material 2. That is, the rolling unit 170 may be disposed behind the drying unit 160 in the transport direction of the current collector 1.

The dried electrode active material 2, that is, the electrode mixture, may be rolled to have an appropriate porosity and electrode density through the rolling unit 170.

The rolling unit 170 is not limited in its device and structure as long as the rolling unit 170 is capable of rolling the electrode mixture. For example, as illustrated in FIG. 1, the rolling unit 170 may include a pair of rolling rolls 171 and 172 disposed at opposite sides with the current collector therebetween to adjust a mutually spaced interval.

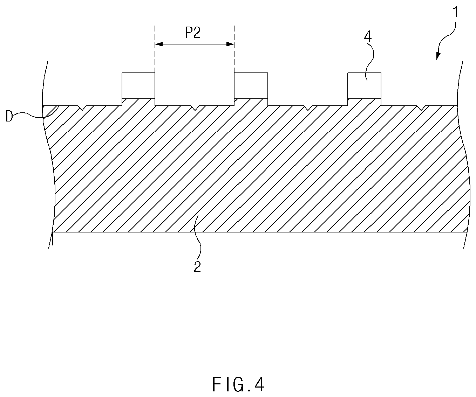

The apparatus 100 for manufacturing the electrode may further include a notching unit 180 that notches the current collector 1. The notching unit 180 may remove the matte layer 3 and form the electrode tab 4 (see FIG. 4). The notching unit 180 may be disposed behind the rolling unit 170 in the transport direction of the current collector 1.

The device and structure of the notching unit 180 are not limited as long as the notching unit 180 is capable of notching the current collector 1 into a preset shape.

For example, as illustrated in FIG. 1, the notching unit 180 may include a pair of molds 181 and 182 disposed at opposite sides with the current collector 1 therebetween to adjust the mutually spaced interval. One of the pair of molds 181 and 182 may be provided as an embossing 181a, and the other may be provided as an engraving 182a, and the embossing 181a and the engraving 182a may be engaged with each other to form the current collector 1.

However, the notching unit 180 may laser notch the current collector 1.

The first area 11 of the current collector 1 may be notched by the notching unit 180 to form the electrode tab 4, and thus, the sheet-shaped electrode may be manufactured. The sheet-shaped electrode may be wound around the rewinder 102.

However, it is not limited thereto, and the current collector 1 passing through the rolling unit 170 may be wound around the rewinder into a roll shape and then unwound again in a subsequent process to pass through the notching unit 180.

The apparatus 100 for manufacturing the electrode may further include a controller 190. The controller 190 may control an overall operation of the apparatus 100 for manufacturing the electrode.

The controller 190 may communicate with the non-contact temperature sensor 140. The controller 190 may receive temperature information measured by the non-contact temperature sensor 140 to compare the temperature information to a preset temperature range.

The controller 190 may communicate with at least one of the transfer unit 110 and/or the heat treatment unit 150. If the measured temperature of the non-contact temperature sensor 140 gets out of the preset temperature range, the controller 190 may feedback control the temperature of the heat treatment unit 150 and/or the speed of the transfer unit 110.

In addition, the controller 190 may communicate with and control at least some of the application unit 120, the coating unit 130, the drying unit 160, the rolling unit 170, or the notching unit 180.

FIG. 2 is a plan view of the current collector illustrated in FIG. 1, FIG. 3 is a plan view illustrating the matte layer and the electrode active material on the current collector illustrated in FIG. 2, and FIG. 4 is a plan view of the notched current collector illustrated in FIG. 3.

The current collector 1 may include a first area 11 including an edge portion in a width direction and a second area 12 including a central portion in the width direction.

The first area 11 may form a non-coating portion of the electrode, and the electrode active material 2 may be applied on the second area 12. The second area 12 may be disposed at one side of the first area 11. The first area 11 and the second area 12 may be divided by a virtual boundary line B, and the boundary line B may be visualized by applying the electrode active material 2 on the current collector 1. That is, the boundary line B may correspond to the edge of the electrode active material 2.

The first area 11 may be disposed at one side of the current collector 1 in the width direction or may be disposed at each of both sides in the width direction. Hereinafter, as illustrated in FIG. 2, a case in which the first area 11 is disposed at each of both the sides in the width direction of the current collector 1 with the second area 12 therebetween will be described as an example.

A width W1 of one of the first areas 11 may be wider than a width W2 of the other first area 11. In this case, one of the first areas 11 may be notched to form the electrode tab 4, and the other first area 11 may be removed by the notching.

A width WO of the second area 12 may be wider than the width W1 or W2 of each first area 11. Preferably, the width WO of the second area 12 may be wider than the sum of the widths W1+W2 of both first areas 11.

As described above, the application unit 120 may apply the matte layer 3 on the first area 11 of the current collector 1, and the coating unit 130 may apply the electrode active material 2 on the second area 12 of the current collector 1. The cross-section in FIG. 3 may show the matte layer 3 applied on the first area 11 and the electrode active material 2 applied on the second area 12.

The application unit 120 may apply the matte layer 3 at regular intervals. That is, the matte layer 3 may be applied at regular intervals P1 in the transport direction of the current collector 1. As a result, an area between adjacent matte layers 3 may be notched as the electrode tab 4.

The application unit 120 may apply the matte layer 3 on both the first areas 11. However, it is not limited thereto, and the application unit 120 may apply the matte layer 3 only on the first area 11 having the wider width W1 of both the first areas 11.

The notching unit 180 may form the electrode tab 4 by notching the first area 11, that is, the non-coating portion. The electrode tabs 4 may be formed at predetermined intervals P2 in a longitudinal direction of the current collector 1.

The notching unit 180 may notch a portion of the second area 12 to which the electrode active material 2 is applied together with the first area 11 in consideration of a tolerance.

The notching unit 180 may notch the first area 11 having the wide width W1 of both the first areas 11 to form the electrode tab 4 and may notch the first area 11 having the narrow width W2 to remove the first area 11.

The notching unit 180 may notch the current collector 1 along a virtual notching line D. In the current collector 1, the outside of the notching line D may be cut to be removed. Since the matte layer 3 of the first area 11 is disposed outside the notching line D, the matte layer 3 may be removed by the notching unit 180.

Thus, since the formation of the electrode tab 4 and the removal of the matte layer 3 are performed simultaneously, there is an advantage that an additional process for removing the matte layer 3 is unnecessary.

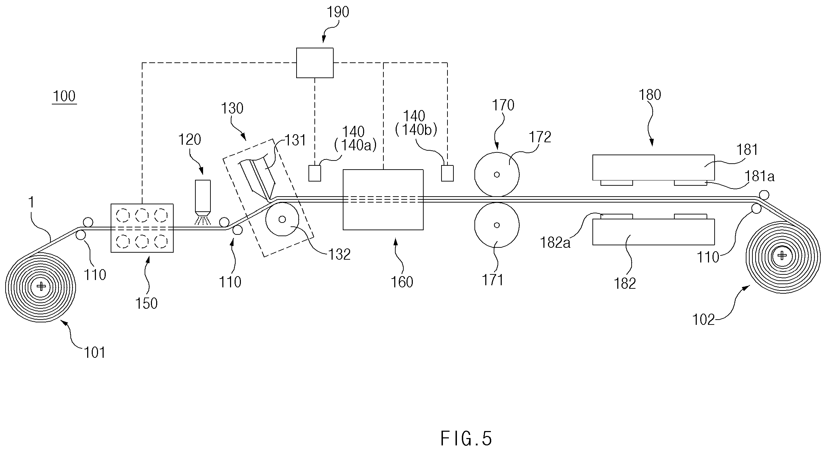

FIG. 5 is a view illustrating a configuration of an apparatus for manufacturing an electrode according to another embodiment of the present invention.

An apparatus 100 for manufacturing an electrode according to another embodiment of the present invention may be the same as the apparatus for manufacturing the electrode according to the foregoing embodiment of the present invention except that a non-contact temperature sensor 140 is provided in plurality, and thus, their duplicated contents will be omitted, and differences therebetween will be described mainly.

The apparatus 100 for manufacturing the electrode according to another embodiment of the present invention may include a first non-contact temperature sensor 140a and a second non-contact temperature sensor 140b.

The first non-contact temperature sensor 140a may be disposed between an application unit 120 and a drying unit 160 in a transfer direction of the current collector 1.

A controller 190 may feedback control a speed of a transfer unit 110 and/or a temperature of a heat treatment unit 150 according to a temperature measured by the first non-contact temperature sensor 140a. In more detail, if the measured temperature of the first non-contact temperature sensor 140a gets out of a preset temperature range, at least one of the speed of the transfer unit 110 or the temperature of the heat treatment unit 150 may be changed.

For example, if the measured temperature of the first non-contact temperature sensor 140a is higher than the upper limit of the preset temperature range, the speed of the transfer unit 110 may increase, or the temperature of the heat treatment unit 150 may decrease. As a result, it may prevent the current collector 1 from being oxidized due to excessive heat treatment.

As another example, if the measured temperature of the first non-contact temperature sensor 140a is lower than the lower limit of the preset temperature range, the speed of the transfer unit 110 may decrease, or the temperature of the heat treatment unit 150 may increase. As a result, the measured temperature may not a recrystallization temperature of the material forming the current collector 1 to prevent concerns that the toughness of the current collector 1 does not sufficiently increase from occurring.

The second non-contact temperature sensor 140a may be disposed behind the drying unit 160 in the transfer direction of the current collector 1.

A controller 190 may feedback control the speed of the transfer unit 110 and/or the temperature of the heat treatment unit 160 according to a temperature measured by the second non-contact temperature sensor 140b. In more detail, if the measured temperature of the second non-contact temperature sensor 140b gets out of a preset temperature range, at least one of the speed of the transfer unit 110 or the temperature of the drying unit 160 may be changed.

For example, if the measured temperature of the second non-contact temperature sensor 140b is higher than the upper limit of the preset temperature range, the speed of the transfer unit 110 may increase, or the temperature of the drying unit 160 may decrease. As a result, an electrode active material 2 may be prevented from being excessively dried or the current collector 1 from being oxidized.

As another example, if the measured temperature of the second non-contact temperature sensor 140b is lower than the lower limit of the preset temperature range, the speed of the transfer unit 110 may decrease, or the temperature of the drying unit 160 may increase. As a result, possibility that the solvent of the electrode active material 2 is not sufficiently evaporated, and thus, an electrode mixture is not formed may be prevented from occurring.

The apparatus 100 for manufacturing the electrode may not include the first non-contact temperature sensor 140a, but may include only the second non-contact temperature sensor 140b.

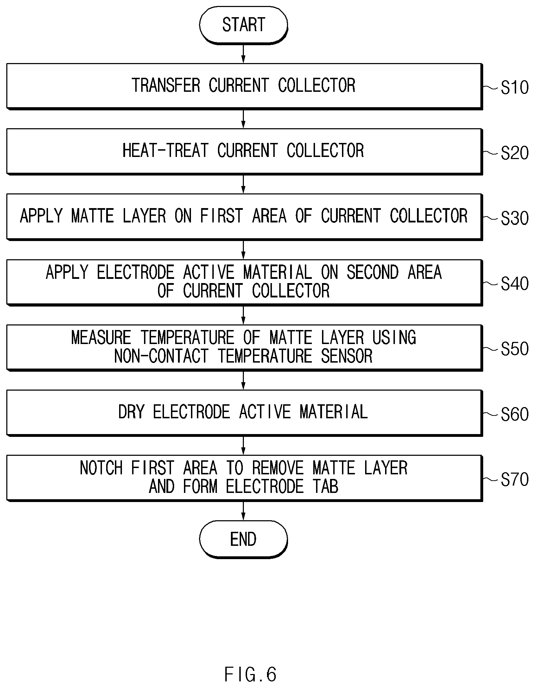

FIG. 6 is a flowchart illustrating a method for manufacturing an electrode according to another embodiment of the present invention.

Hereinafter, a manufacturing method performed by the apparatus 100 for manufacturing the electrode described above will be described as another embodiment of the present invention. Thus, the above descriptions of the apparatus 100 for manufacturing the electrode may be cited as descriptions of the method for manufacturing the electrode.

The method for manufacturing the electrode according to another embodiment of the present invention may include a process (S10) of transferring a current collector 1, a process (S30) of applying a matte layer 3 on a first area 11 of the current collector 1, a process (S40) of applying an electrode active material 2 on a second area 12 of the current collector 1, and a process (S50) of measuring a temperature of the matte layer 3 using a non-contact temperature sensor 140.

In the process (S10) of transferring the current collector 1, a transfer unit 110 may transfer the current collector 1. The process (S10) of transferring the current collector 1 may continue continuously or discontinuously in other processes (S20 to S70).

In the process (S30) of applying the matte layer 3, an application unit 120 may apply the matte layer 3 on the first area 11 of the current collector 1. As described above, the application unit 120 may apply the matte layer 3 at regular intervals. That is, the matte layer 3 may be applied at regular intervals P1 (see FIG. 3) in the transport direction of the current collector 1.

The process (S40) of applying the electrode active material 2 may be performed after the process (S30) of applying the matte layer 3.

In the process (S40) of applying the electrode active material 2, a coating unit 130 may apply the electrode active material 2 on the second area 12 of the current collector 1.

In the process (S50) of measuring a temperature of the matte layer 3, a non-contact temperature sensor 140 may measure a temperature of the matte layer 3 applied to the current collector 1. Since reflectance of the matte layer 3 is lower than that of the current collector 1, the non-contact temperature sensor 140 may accurately measure the temperature.

The method for manufacturing the electrode may further include at least one of a process (S20) of heat-treating the current collector 1, a process (S60) of drying the electrode active material 2, or a process (S70) of notching the current collector 1 to remove the matte layer 3 and form the electrode tab 4.

The process (S20) of heat-treating the current collector 1 may be performed before the process (S30) of applying the matte layer 3.

In the process (S20) of heat-treating the current collector 1, a heat treatment unit 150 may heat treat the current collector 1. If the temperature measured in the process (S50) of measuring the temperature of the matte layer 3 gets out of a preset temperature range, a transfer speed of the current collector 1 and/or a temperature for heat treatment of the current collector 1 may be feedback controlled.

The process (S60) of drying the electrode active material 2 may be performed after the process (S40) of applying the electrode active material 2.

In the process (S60) of drying the electrode active material 2, a drying unit 160 may dry the electrode active material 2.

The process (S50) of measuring the temperature of the matte layer 3 may be performed after the process (S60) of drying the electrode active material 2. In this case, if the temperature measured in the process (S50) of measuring the temperature of the matte layer 3 gets out of a preset temperature range, the transfer speed of the current collector 1 and/or the drying temperature of the electrode active material 2 may be feedback controlled.

The process (S70) of notching the current collector 1 may be performed after the process (S60) of drying the electrode active material 2. In addition, the electrode active material 2 may be rolled with the current collector 1 between the process (S70) of notching the current collector 1 and the process (S60) of drying the electrode active material 2.

In the process (S70) of notching the current collector 1, the notching unit 180 may notch the current collector 1, more specifically the first area 11, to remove the matte layer 3 and form the electrode tab 4.

Through this series of processes, the temperature of the current collector 1 may be precisely managed during the electrode manufacturing process. In addition, the heat treatment of the current collector 1 and the drying of the electrode active material 2 may be appropriately performed to improve quality of the electrode.

The scope of the present invention is defined by the appended claims.

### [Description of the Symbols]

| | | | |
|---|---|---|---|
| 1: | Current collector | 11: | First area |
| 12: | Second area | 2; | Electrode active material |
| 3: | Matte layer | 4: | Electrode tab |
| 100: | Apparatus for manufacturing electrode | 110: | Transfer unit |
| 120: | Application unit | 130: | Coating unit |
| 140: | Non-contact temperature sensor | 150: | Heat treatment unit |
| 160: | Drying unit | 170: | Rolling unit |
| 180: | Notching unit | 190: | Controller |

## Claims

1. An apparatus for manufacturing an electrode, the apparatus comprising:
a transfer unit configured to transfer a sheet-shaped current collector;
an application unit configured to apply a matte layer having reflectance less than that of the current collector on a first area comprising an edge portion in a width direction of the current collector;
a coating unit configured to applying an electrode active material on a second area comprising a central portion in the width direction of the current collector and disposed at one side of the first area;
a non-contact temperature sensor configured to measure a temperature of the matte layer; and
a notching unit configured to notch the current collector so as to remove the matte layer and form an electrode tab.

2. The apparatus of claim 1, wherein the application unit is configured to apply the matte layer at regular intervals.

3. The apparatus of claim 1, wherein the coating unit is disposed behind the application unit in a transfer direction of the current collector.

4. The apparatus of claim 1,
further comprising:
a heat treatment unit configured to heat-treat the current collector; and
a controller configured to feedback control a temperature of the heat treatment unit and/or a speed of the transfer unit when a measured temperature of the non-contact temperature sensor gets out of a preset temperature range,
wherein the non-contact temperature sensor is disposed behind the heat treatment unit in a transfer direction of the current collector.

5. The apparatus of claim 1, further comprising:
a drying unit configured to dry the electrode active material; and
a controller configured to feedback control a temperature of the drying unit and/or a speed of the transfer unit when a measured temperature of the non-contact temperature sensor gets out of a preset temperature range,
wherein the non-contact temperature sensor is disposed behind the drying unit in a transfer direction of the current collector.

6. A method for manufacturing an electrode, the method comprising steps of:
transferring a sheet-shaped current collector;
applying a matte layer having reflectance less than that of the current collector on a first area comprising an edge portion in a width direction of the current collector;
applying an electrode active material on a second area comprising a central portion in the width direction of the current collector and disposed at one side of the first area;
measuring a temperature of the matte layer using a non-contact temperature sensor; and
notching the current collector to remove the matte layer and form an electrode tab.

7. The method of claim 6, wherein, in the applying of the matte layer, the matte layer is applied at regular intervals in a transfer direction of the current collector.

8. The method of claim 6, wherein the applying of the matte layer is performed before the applying of the electrode active material.

9. The method of claim 6, further comprising a step of heat-treating the current collector using a heat treatment unit,
wherein the non-contact temperature sensor is disposed behind the heat treatment unit in the transfer direction of the current collector, and
when a measured temperature of the non-contact temperature sensor gets out of a preset temperature range, a temperature at which the current collector is heat-treated and/or a speed of the transfer unit are feedback controlled.

10. The method of claim 6, further comprising a step of drying the current collector using a drying unit,
wherein the non-contact temperature sensor is disposed behind the drying unit in the transfer direction of the current collector, and
when a measured temperature of the non-contact temperature sensor gets out of a preset temperature range, a temperature at which the electrode active material is dried and/or a speed of the transfer unit are feedback controlled.

## Patentansprüche

1. Vorrichtung zur Herstellung einer Elektrode, wobei die Vorrichtung Folgendes umfasst:
eine Übertragungseinheit, die dazu ausgebildet ist, einen blattförmigen Stromableiter zu übertragen;
eine Auftragungseinheit, die dazu ausgebildet ist, eine Mattschicht mit einem Reflexionsgrad, der geringer ist als der des Stromableiters, auf einen ersten Bereich aufzubringen, der einen Randbereich in Breitenrichtung des Stromableiters umfasst;
eine Beschichtungseinheit, die dazu ausgebildet ist, ein Elektrodenaktivmaterial auf einen zweiten Bereich aufzubringen, der einen zentralen Bereich in der Breitenrichtung des Stromableiters umfasst und auf einer Seite des ersten Bereichs angeordnet ist;
einen berührungslosen Temperatursensor, der dazu ausgebildet ist, eine Temperatur der Mattschicht zu messen; und
eine Ausklinkeinheit, die dazu ausgebildet ist, den Stromableiter auszuklinken, sodass die Mattschicht entfernt wird und eine Elektrodenfahne gebildet wird.

2. Vorrichtung nach Anspruch 1, wobei die Auftragungseinheit dazu ausgebildet ist, die Mattschicht in regelmäßigen Intervallen aufzubringen.

3. Vorrichtung nach Anspruch 1, wobei die Beschichtungseinheit hinter der Auftragungseinheit in einer Übertragungsrichtung des Stromableiters angeordnet ist.

4. Vorrichtung nach Anspruch 1, weiter umfassend:
eine Wärmebehandlungseinheit, die dazu ausgebildet ist, den Stromableiter wärmezubehandeln; und
eine Steuereinheit, die dazu ausgebildet ist, eine Temperatur der Wärmebehandlungseinheit und/oder eine Geschwindigkeit der Übertragungseinheit rückgekoppelt zu regeln, wenn eine gemessene Temperatur des berührungslosen Temperatursensors aus einem voreingestellten Temperaturbereich herausgeht,
wobei der berührungslose Temperatursensor hinter der Wärmebehandlungseinheit in einer Übertragungsrichtung des Stromableiters angeordnet ist.

5. Vorrichtung nach Anspruch 1, weiter umfassend:
eine Trocknungseinheit, die dazu ausgebildet ist, das Elektrodenaktivmaterial zu trocknen; und
eine Steuereinheit, die dazu ausgebildet ist, eine Temperatur der Trocknungseinheit und/oder eine Geschwindigkeit der Übertragungseinheit rückgekoppelt zu regeln, wenn eine gemessene Temperatur des berührungslosen Temperatursensors aus einem voreingestellten Temperaturbereich herausgeht,
wobei der berührungslose Temperatursensor hinter der Trocknungseinheit in einer Übertragungsrichtung des Stromableiters angeordnet ist.

6. Verfahren zur Herstellung einer Elektrode, wobei das Verfahren folgende Schritte umfasst:
Übertragen eines blattförmigen Stromableiters;
Aufbringen einer Mattschicht mit einem Reflexionsgrad, der geringer ist als der des Stromableiters, auf einen ersten Bereich, der einen Randbereich in einer Breitenrichtung des Stromableiters umfasst;
Aufbringen eines Elektrodenaktivmaterials auf einen zweiten Bereich, der einen zentralen Bereich in der Breitenrichtung des Stromableiters umfasst und auf einer Seite des ersten Bereichs angeordnet ist;
Messen einer Temperatur der Mattschicht unter Verwendung eines berührungslosen Temperatursensors; und
Ausklinken des Stromableiters, um die Mattschicht zu entfernen und eine Elektrodenfahne zu bilden.

7. Verfahren nach Anspruch 6, wobei beim Aufbringen der Mattschicht die Mattschicht in regelmäßigen Intervallen in einer Übertragungsrichtung des Stromableiters aufgebracht wird.

8. Verfahren nach Anspruch 6, wobei das Aufbringen der Mattschicht vor dem Aufbringen des Elektrodenaktivmaterials durchgeführt wird.

9. Verfahren nach Anspruch 6, weiter umfassend einen Schritt des Wärmebehandelns des Stromableiters unter Verwendung einer Wärmebehandlungseinheit,
wobei der berührungslose Temperatursensor hinter der Wärmebehandlungseinheit in der Übertragungsrichtung des Stromableiters angeordnet ist, und
wenn eine gemessene Temperatur des berührungslosen Temperatursensors aus einem voreingestellten Temperaturbereich herausgeht, werden eine Temperatur, bei der der Stromableiter wärmebehandelt wird, und/oder eine Geschwindigkeit der Übertragungseinheit rückgekoppelt geregelt.

10. Verfahren nach Anspruch 6, weiter umfassend einen Schritt des Trocknens des Stromableiters unter Verwendung einer Trocknungseinheit,
wobei der berührungslose Temperatursensor hinter der Trocknungseinheit in der Übertragungsrichtung des Stromableiters angeordnet ist, und
wenn eine gemessene Temperatur des berührungslosen Temperatursensors aus einem voreingestellten Temperaturbereich herausgeht, werden eine Temperatur, bei der das Elektrodenaktivmaterial getrocknet wird, und/oder eine Geschwindigkeit der Übertragungseinheit rückgekoppelt geregelt.

## Revendications

1. Appareil de fabrication d'une électrode, l'appareil comprenant :
une unité de transfert configurée pour transférer un collecteur de courant en forme de feuille ;
une unité d'application configurée pour appliquer une couche mate présentant une réflectance inférieure à celle du collecteur de courant sur une première zone comprenant une partie bord dans une direction de la largeur du collecteur de courant ;
une unité de revêtement configurée pour appliquer un matériau actif d'électrode sur une deuxième zone comprenant une partie centrale dans la direction de la largeur du collecteur de courant et disposée sur un côté de la première zone ;
un capteur de température sans contact configuré pour mesurer une température de la couche mate ; et
une unité d'entaillage configurée pour entailler le collecteur de courant de manière à retirer la couche mate et à former une languette d'électrode.

2. Appareil selon la revendication 1, dans lequel l'unité d'application est configurée pour appliquer la couche mate à des intervalles réguliers.

3. Appareil selon la revendication 1, dans lequel l'unité de revêtement est disposée derrière l'unité d'application dans une direction de transfert du collecteur de courant.

4. Appareil selon la revendication 1,
comprenant en outre :
une unité de traitement thermique configurée pour soumettre le collecteur de courant à un traitement thermique ; et
un dispositif de commande configuré pour commander par rétroaction une température de l'unité de traitement thermique et/ou une vitesse de l'unité de transfert lorsqu'une température mesurée du capteur de température sans contact sort d'une plage de température prédéfinie,
dans lequel le capteur de température sans contact est disposé derrière l'unité de traitement thermique dans une direction de transfert du collecteur de courant.

5. Appareil selon la revendication 1, comprenant en outre :
une unité de séchage configurée pour sécher le matériau actif d'électrode ; et
un dispositif de commande configuré pour commander par rétroaction une température de l'unité de séchage et/ou une vitesse de l'unité de transfert lorsqu'une température mesurée du capteur de température sans contact sort d'une plage de température prédéfinie,
dans lequel le capteur de température sans contact est disposé derrière l'unité de séchage dans une direction de transfert du collecteur de courant.

6. Procédé de fabrication d'une électrode, le procédé comprenant les étapes suivantes :
le transfert d'un collecteur de courant en forme de feuille ;
l'application d'une couche mate présentant une réflectance inférieure à celle du collecteur de courant sur une première zone comprenant une partie bord dans une direction de la largeur du collecteur de courant ;
l'application d'un matériau actif d'électrode sur une deuxième zone comprenant une partie centrale dans la direction de la largeur du collecteur de courant et disposée sur un côté de la première zone ;
la mesure d'une température de la couche mate au moyen d'un capteur de température sans contact ; et
l'entaillage du collecteur de courant pour retirer la couche mate et former une languette d'électrode.

7. Procédé selon la revendication 6, dans lequel, lors de l'application de la couche mate, la couche mate est appliquée à des intervalles réguliers dans une direction de transfert du collecteur de courant.

8. Procédé selon la revendication 6, dans lequel l'application de la couche mate est effectuée avant l'application du matériau actif d'électrode.

9. Procédé selon la revendication 6, comprenant en outre une étape de soumission du collecteur de courant à un traitement thermique au moyen d'une unité de traitement thermique,
dans lequel le capteur de température sans contact est disposé derrière l'unité de traitement thermique dans la direction de transfert du collecteur de courant, et
lorsqu'une température mesurée du capteur de température sans contact sort d'une plage de température prédéfinie, une température à laquelle le collecteur de courant est soumis à un traitement thermique et/ou une vitesse de l'unité de transfert sont commandées par rétroaction.

10. Procédé selon la revendication 6, comprenant en outre une étape de séchage du collecteur de courant au moyen d'une unité de séchage,
dans lequel le capteur de température sans contact est disposé derrière l'unité de séchage dans la direction de transfert du collecteur de courant, et
lorsqu'une température mesurée du capteur de température sans contact sort d'une plage de température prédéfinie, une température à laquelle le matériau actif d'électrode est séché et/ou une vitesse de l'unité de transfert sont commandées par rétroaction.
